(19) **Europäisches Patentamt**

**European Patent Office**

**Office européen des brevets**

(11) **EP 0 778 162 B1**

(12) **EUROPEAN PATENT SPECIFICATION**

(45) Date of publication and mention
of the grant of the patent:
**30.05.2001   Bulletin 2001/22**

(51) Int Cl.⁷: **B60C 11/00**, B60C 3/04,
B60C 11/04

(21) Application number: **96308731.7**

(22) Date of filing: **03.12.1996**

(54) **Pneumatic tyre**

Luftreifen

Pneumatique

(84) Designated Contracting States:
**DE FR GB**

(30) Priority: **05.12.1995  GB 9524890**
             **05.09.1996  GB 9618497**

(43) Date of publication of application:
**11.06.1997   Bulletin 1997/24**

(73) Proprietor: **SUMITOMO RUBBER INDUSTRIES
LIMITED**
**Kobe-shi, Hyogo-ken (JP)**

(72) Inventor: **Corner, Michael Raymond
Coundon, Coventry CV5 8HT (GB)**

(74) Representative: **Stewart, Charles Geoffrey
SP TYRES UK LIMITED
Technical Division
Fort Dunlop, Erdington,
Birmingham B24 9QT (GB)**

(56) References cited:
**EP-A- 0 064 934**          **EP-A- 0 196 161**
**EP-A- 0 658 450**          **FR-A- 2 177 884**

• **PATENT ABSTRACTS OF JAPAN vol. 8, no. 61
(M-284), 23 March 1984 & JP 58 211902 A
(SUMITOMO GOMU KOGYO KK), 9 December
1983,**

## Description

This invention relates to a pneumatic tyre and particularly to a tyre for a vehicle having three or more wheels.

Such vehicles, unlike two-wheeled motorcycles, are not banked over in use and therefore the tyres are not subject to running at very high camber angles. Thus tyres on a four-wheeled passenger vehicle for example will normally operate at a maximum camber angle of 5°. Accordingly conventional tyres for such vehicles have relatively flat ground contacting treads which are designed to use the entire width of the tread and to present a substantially constant road contact area, both in shape and size, under all motoring conditions. Therefore such conventional tyres have tread patterns which have a substantially uniform pattern depth over the tread surface, to provide water clearance from the contact area,. In this way the pattern and thus the wet grip of the tyre is preserved as the tread wears evenly across its width.

Variable depth tread grooves are known for example from EP-A-0064934. This discloses a racing tyre having a extremely wide flat tread of uniform thickness. Reduced groove depths in the shoulder regions of the tyre increase block stiffness and thus prevents overheating of the tyre during high speed running in dry conditions.

Recently a tyre for a passenger car has been proposed by EP-A-0658450 which does not have the conventional flat tread. This new tyre comprising all of the features of the preamble of claim 1 has a reinforced tread region having substantial curvature in transverse cross-section. In straight running the contact area between the tread and the road is relatively narrow in comparison to that of the conventional tyre and is substantially less than the width of the tyre. In tests this new tyre has shown improved characteristics which are believed to be due in part to the ability of the contact area to move across the tread and/or to increase in transverse width in response to changes in load.

The Inventor has investigated the wear of the above-mentioned new tyre and discovered that it does not wear as a conventional flat tread tyre. Thus the pattern of the new tyre is not maintained during the life of the tyre.

Accordingly it is the object of the present invention to provide a tyre of the proposed type which maintains its tread pattern throughout the life of the tyre.

This object is achieved by a pneumatic tyre according to claim 1.

Further aspects of the present invention will become apparent from the following description by way of example only of one embodiment and in conjunction with the following drawings in which:-

Figure 1 shows a schematic diagram of a tread pattern of a tyre according to the present invention;

Figure 2 shows a schematic diagram of a transverse cross-section of the tyre of Figure 1 taken in the direction of A-A; and

Figure 3 is a schematic diagram showing the distribution of pattern depth in a tyre according to the invention.

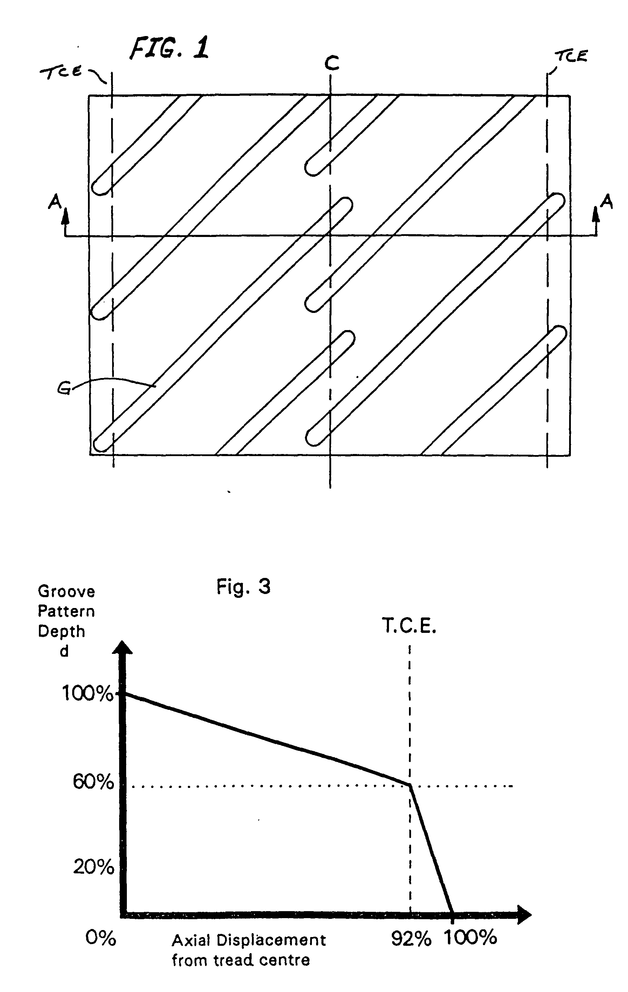

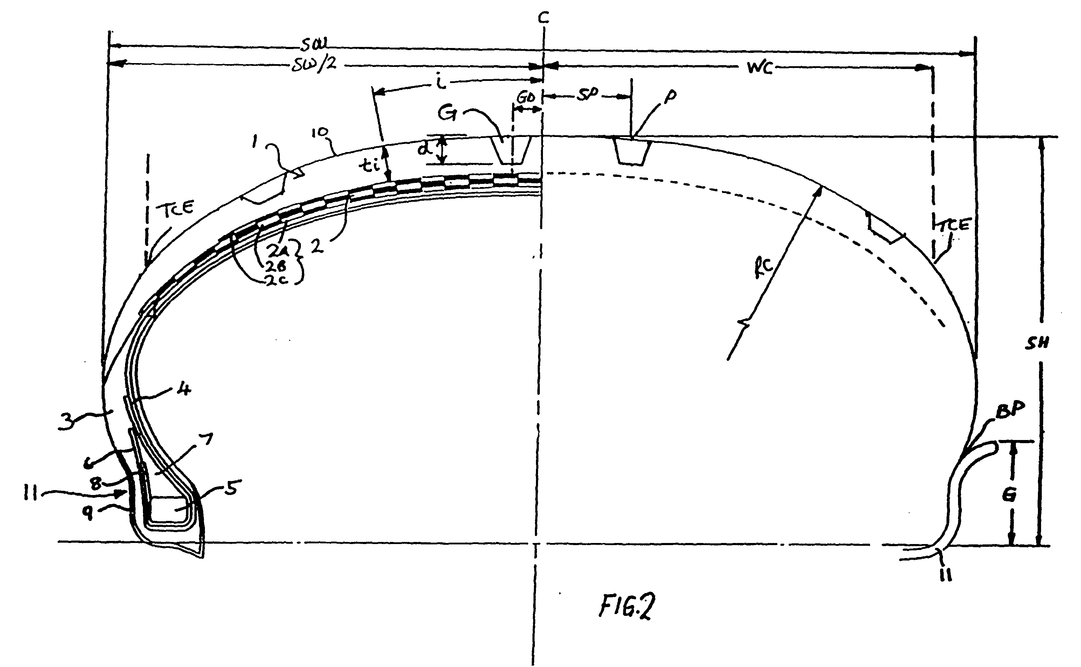

The tyre of Figures 1 and 2 is a 195/45R16 passenger vehicle tyre for a 6½" x 16" wheel rim. The tyre comprises a tread region 1 reinforced by a breaker assembly 2 and a pair of sidewalls 3. A single ply of radially extending cords provides a carcass reinforcement 4 which extends between bead regions 11 of the tyre and is wrapped at each edge from the inside to the outside in the axial direction around a bead core 5. The edge region 6 of the ply 4 is turned up radially outwards to provide a ply turn-up. A rubber apex 7 is positioned on top of the bead core 5 in a conventional manner. A chafer 8 is wrapped around the bead 5 inwards of the ply 4 to provide a cushion for the ply around the bead core 5 and apex 7. A clinch strip 9 is also positioned around the bead.

The tyre carcass has a substantially curved cross-sectional shape to match the breaker package 2. The tread region has a gradually decreasing radius of curvature Rc moving outward from the tyre circumferential centreline C. More specifically the tread region has a radius of curvature Rc which continually decreases to either side of the centreline axially outwards of a point P on the tread surface which is at a distance SP equal to 20% of the distance from the centreline C to the tread contact edge TCE.

The tread thickness reduces continuously from the tread centre to the tread contact edge TCE. Here the tread thickness is the distance between the bottom of the tread or sub-tread component and the tread outer edge measured normally to the tread outer surface.

Accordingly in this embodiment the tread thickness distribution is:-

| $t_i$ | 9.2 | 9.0 | 8.4 | 7.3 | 6.0 | 4.8 | 3.9 | 2.8 |
|---|---|---|---|---|---|---|---|---|
| i | 30 | 40 | 50 | 60 | 70 | 80 | 90 | 100 |

wherein $t_i$ is the tread thickness in mm at a position displaced by $_i$ mm along the tread surface from the tread centre C.

The tread region 1 is provided with a tread pattern on the tread surface 10 comprising diagonal grooves G extending from the tread centre axially outward. These grooves may be 'U' shaped of 'V' shaped in cross-section, both of which are common in the art. The depth d of the groove varies inversely with its displacement GD from the tread centre C. In this particular embodiment the groove depth d decreases linearly from the tread centre C to the tread contact edge TCE. The groove depth d at the tread contact edge TCE is 60% of the maximum groove depth d at the tread centre C. This pattern depth distribution is illustrated in Figure 3 which shows the graph of groove pattern depth d expressed as a percentage of the maximum groove depth at the tread centre plotted against the axial displacement GD expressed as a percentage of the maximum displacement $\frac{SW}{2}$ which is half of the tyre section width SW. From Figure 3 it can be seen that in this embodiment the tread contact edge TCE is displaced from the tread centre C by a distance WC equal to 92% of the half section width $\frac{SW}{2}$.

A tread pattern depth and tread thickness distribution of the above-described kind has been shown to preserve worn pattern depth differentials and pattern appearance throughout the life of the pattern.

## Claims

1.  A pneumatic tyre for a vehicle comprising a ground contacting tread region extending between sidewalls (3) and through two tread contact edges (TCE), and bead regions (11) disposed radially and axially inward of the outer tread surface, the latter having a curvature in the axial direction, when the tyre is mounted on a wheel rim and normally inflated, which has a continuously decreasing radius (Rc) from a point P which is at an axial distance SP from the tyre circumferential centreline (C) equal to 20% of the distance (WC) from the tread centre to the tread contact edge, the tread region being provided with tread grooves (G) and having the tread thickness (ti) reducing continuously from the tread centre to the tread contact edge (TCE), characterised in that the depth (d) of the tread grooves decreases linearly with axial displacement from the tread centre and the groove depth (d) at the tread contact edge (TCE) is 60% of the groove depth (d) at the tread centre wherein the tread contact edge (TCE) is axially displaced from the tread centre by a distance (WC) of 92% of the half section width ($\frac{SW}{2}$). of the tyre.

2.  A pneumatic tyre according to claim 1, characterised in that the tread thickness in the tread centre is 9.2mm.

3.  A pneumatic tyre according to claim 1 or claim 2, characterised in that the tread thickness at the tread contact edge is 2.8mm.

## Patentansprüche

1.  Luftreifen für ein Fahrzeug, mit einem den Boden berührenden Laufstreifenbereich, der sich zwischen Seitenwänden (3) und durch zwei Laufstreifenkontaktkanten (TCE) erstreckt, und Wulstbereichen (11), die radial und axial innen in bezug auf die äußere Laufstreifenoberfläche angeordnet sind, wobei die letztere eine Krümmung in der axialen Richtung aufweist, wenn der Reifen auf eine Radfelge aufgezogen und normal aufgepumpt ist, die einen kontinuierlich abnehmenden Radius (Rc) von einem Punkt P ab aufweist, der sich in einem axialen Abstand SP von der Reifenumfangsmittellinie (C) befindet, der gleich 20% des Abstandes (WC) von der Laufstreifenmitte zur Laufstreifenkontaktkante beträgt, wobei der Laufstreifenbereich mit Laufstreifenrillen (G) versehen ist und die Laufstreifendicke (ti) kontinuierlich von der Laufstreifenmitte zur Laufstreifenkontaktkante (TCE) weniger wird, dadurch gekennzeichnet, daß die Tiefe (d) der Laufstreifenrillen linear mit einer axialen Verschiebung von der Laufstreifenmitte abnimmt und die Rillentiefe (d) an der Laufstreifenkontaktkante (TCE) 60% der Rillentiefe (d) in der Laufstreifenmitte beträgt, wobei die Laufstreifenkontaktkante (TCE) von der Laufstreifenmitte mit einem Abstand (WC) von 92% der halben Querschnittsbreite ($\frac{SW}{2}$) des Reifens axial versetzt ist.

2.  Luftreifen nach Anspruch 1, dadurch gekennzeichnet, daß die Laufstreifendicke in der Laufstreifenmitte 9,2 mm beträgt.

3.  Luftreifen nach Anspruch 1 oder Anspruch 2, dadurch gekennzeichnet, daß die Laufstreifendicke an der Laufstreifenkontaktkante 2,8 mm beträgt.

## Revendications

1.  Pneumatique destiné à un véhicule, ayant une région de bande de roulement de contact avec le sol qui s'étend entre des flancs (3) et passe par deux bords (TCE) de contact de bande de roulement, et des régions (11) de talon disposées radialement et axialement vers l'intérieur de la surface externe de bande de roulement, cette dernière ayant une courbure dans la direction axiale, lorsque le pneumatique est monté sur une jante de roue et est gonflé normalement, qui a un rayon ($R_c$) qui diminue constamment d'un point P placé à une distance axiale SP de l'axe central circonférentiel (C) du pneumatique égale à 20 % de la distance (WC) comprise entre le centre de la bande de roulement et le bord de contact de la bande de roulement, la région de la bande de roulement ayant des gorges (G) de bande de roulement et ayant une épaisseur ($t_i$) de bande de roulement qui diminue de façon continue du centre de la bande de roulement vers son bord de contact (TCE), caractérisé en ce que la profondeur (d) des gorges de bande de roulement diminue linéairement avec le décalage au centre de la bande de roulement, la profondeur (d) de gorge au bord (TCE) de contact de la bande de roulement est égale à 60 % de la profondeur (d) de gorge au centre de la bande de roulement, et le bord (TCE) de contact de la bande de roulement est décalé axialement par rapport au centre de la bande de roulement d'une distance (WC) égale à 92 % de la demi-largeur en coupe (SW/2) du pneumatique.

2. Pneumatique selon la revendication 1, caractérisé en ce que l'épaisseur de la bande de roulement au centre de celle-ci est égale à 9,2 mm.

3. Pneumatique selon la revendication 1 ou 2, caractérisé en ce que l'épaisseur de la bande de roulement au bord de contact de celle-ci est égale à 2,8 mm.

## FIG. 1

TCE

TCE

C

A

A

G

## Fig. 3

Groove
Pattern
Depth
d

T.C.E.

100%

60%

20%

0%

Axial Displacement
from tread centre

92%  100%

FIG.2

EP 0 778 162 B1